# EUROPÄISCHE PATENTSCHRIFT

(11) **EP 2 160 942 B1**
(45) Veröffentlichungstag und Bekanntmachung des Hinweises auf die Patenterteilung: **09.04.2014**
(21) Anmeldenummer: 09167946.4
(22) Anmeldetag: 14.08.2009
(51) Int. Cl.: A01K 9/00

(54) **Ventilvorrichtung für Säugetränkebehälter und Säugetränkeeimer**
Valve device for swill containers and swill bucket
Dispositif de soupape pour récipient de boisson par aspiration et seau de boisson par aspiration

(30) Priorität: 05.09.2008 DE 202008011868 U; 08.02.2009 DE 202009001510 U
(43) Veröffentlichungstag der Anmeldung: 10.03.2010
(73) Patentinhaber: Strasser, Josef, 84494 Niederbergkirchen (DE)
(72) Erfinder: Strasser, Josef, 84494 Niederbergkirchen (DE)
(74) Vertreter: Epping, Wilhelm

(56) Entgegenhaltungen:
- GB-A- 1 253 398
- US-A- 2 628 591
- US-A- 2 652 027
- US-A- 3 441 160

## Beschreibung

Die Erfindung bezieht sich auf eine Ventilvorrichtung für Säugetränkeeimer zum Saugen von Kälbern und anderen Jungtieren, bei der an einem Behälter für Flüssignahrung, insbesondere einem Eimer, ein Saugnuckel vorgesehen ist, der über eine Ventileinrichtung an dem Behälter angeschlossen ist und es dem Jungtier ermöglicht, Flüssignahrung aus dem Behälter zu saugen.

Das Dokument US 3 441 160 A offenbart eine Ventilvorrichtung geeignet für einen Saugnuckel und geeignet für die Anschließung an eine seitliche Öffnung eines Säugetränkeeimers, bei der ein Ventilkörper mit einem Ventilkanal vorgesehen ist an dessen dem Saugnuckel zugewandten Ende eine Ventilklappe vorgesehen ist, die einen Rückfluss von Nahrungsflüssigkeit in den Säugetränkebehälter durch den Ventilkanal hindurch stoppt wobei, an dem Säugetränkebehälter zugewandten Ende ein Saugrüssel ein- oder aufsteckbar ist und zum Verbinden des Saugnuckels mit der vom Säugetränkeimer abgewandten Seite des Ventilkörpers ein Schraubverschluss, der auf ein Außengewinde des Säugetränkeeimers aufschraubbar ist, vorgesehen ist.

Kälbertrankeeimer der herkömmlichen Art weisen an einer Frontunterseite eine runde Öffnung mit einem Durchmesser von ca. 38 mmm auf, in die eine Anschlussvorrichtung für einen Saugnuckel einsetzbar ist. Damit beim Saugen die Flüssignahrung, beispielsweise Milch, nicht in den Eimer zurückfließt, weisen herkömmliche Anschlussvorrichtungen Ventile mit Rückschlagkugeln auf.

Ein solches aus dem Stand der Technik bekanntes Ventil ist beispielsweise in der GB 1,138,898 und in der US 2,652,027 beschrieben.

In der Praxis führt diese Art der Rücklaufverhinderung häufig zu Verkeimungen im Ventil, da die Rückschlagkugel schwer zugänglich und damit aufwändig zu reinigen ist.

Des Weiteren ist in der US 2,628,591 eine Ventilvorrichtung beschrieben, die eine Ventilklappe anstelle der Rückschlagkugel aufweist, die von Innen durch eine bodenseitige Öffnung des Eimers gesteckt und auf die von Außen ein Saugnuckel aufgesteckt wird. Eine sichere Verbindung zwischen Ventilvorrichtung und Eimer einerseits und Saugnuckel andererseits ist bei dieser Vorrichtung nicht gewährleistet.

Der vorliegenden Erfindung liegt die Aufgabe zugrunde, eine Ventilvorrichtung zur Verfügung zu stellen, die eine vereinfachte tägliche Reinigung ermöglicht.

Diese Aufgabe wird durch eine Ventilvorrichtung mit den Merkmalen des Patentanspruches 1 gelöst. Vorteilhafte Weiterbildungen der Ventilvorrichtung sind Gegenstand der Unteransprüche 2 und 3. Gegenstand von Anspruch 4 ist ein Säugetränkeeimer.

Der Offenbarungsgehält der Patentansprüche 1 bis 4 wird durch Rückbezug in die Beschreibung aufgenommen.

Eine Ventilvorrichtung gemäß der Erfindung umfasst einen Ventilkörper, der einerseits an eine Öffnung des Säugetränkeeimers anschließbar ist und an dem andererseits ein Saugnuckel anschließbar ist, und der einen Ventilkanal vom Säugetränkeeimer zum Saugnuckel hin aufweist.

Am dem Säugetränkeeimer zugewandten Ende des Ventilkanals ist ein Saugrüssel ein- oder aufsteckbar und am dem Saugnuckel zugewandten Ende des Ventilkanals ist eine Ventilklappe vorgesehen, die an dem Ventilkörper drehbar gelagert ist.

Die ventilklappe verschließt den Ventilkanal, sobald sich die Fließrichtung der Nahrungflüssigkeit zum Säugetränkeeimer hin umdreht, was beispielsweise dann der Fall ist, wenn das saugende Tier den Saugnuckel zusammendrückt, um die Nahrungsflüssigkeit aus dem Saugnuckel zu pressen.

Die Rückflussverhinderung erfolgt folglich mittels einer Rückschlagklappe, die an der Außenseite der Durchflussleitung, sprich des Ventilkanals, am ventilkörper aufgehängt ist. Beim Saugen wird durch die Fließströmung der Flüssigkeit zum Saugnuckel hin die Rückschlagklappe nach oben gedrückt, wodurch der Ventilkanal geöffnet wird. Wird nicht gesaugt, klappt die Rückschlagklappe durch die Schwerkraft wieder nach unten, womit ein Rückfluss in den saugetränkeeimer verhindert wird.

Durch ein Hockkippen der Rückschlagklappe ist der Ventilkanal problemlos zugänglich und kann auf einfache Weise gereinigt werden.

Vorzugsweise ist am Ventilkörper eine Aufnahme zur drehbaren Führung der Ventilklappe vorgesehen ist, an die die Ventilklappe wiederholt ansteckbar und wieder abnehmbar ist. Dadurch lässt sich auch die Ventilklappe und deren Aufnahme vereinfacht reinigen oder bei Defekt austauschen.

Zudem ist vorteilhafterweise der Saugrüssel nicht fest am Ventil verschweißt oder anderweitig fest verbunden, sondern vorzugsweise vermittels einer konischen Steckverbindung auf oder in den Ventilkanal auf- oder eingesteckt. Dadurch ist dieser abnehmbar, wodurch die Reinigung wesentlich vereinfacht ist.

Zum Verbinden des Saugnuckels mit dem Ventilkörper ist ein Bajonettverschluss oder Klickverschluss oder ein ähnlicher Schnellverschluss vorgesehen, sodass der Saugnuckel mit einem einzigen Handgriff vom Ventilkörper abnehmbar ist, was den Reinigungsvorgang weitergehend vereinfacht.

Insgesamt weist eine Ventilvorrichtung gemäß der Erfindung keine schwer zugänglichen Stellen auf, wodurch sie leicht sauber zu halten ist und die Gefahr einer Verkeimung erheblich verringert werden kann.

Weitere Vorteile und vorteilhafte Ausgestaltungen der Erfindung ergeben sich aus dem im Folgenden in Verbindung mit den Figuren 1 bis 5 erläuterten Ausführungsbeispiel. Es zeigen:
Figur 1 eine schematische Darstellung einer Schnittansicht eines Ventilkörpers gemäß Ausführungsbeispiel,
Figuren 2 und 3 eine schematische Darstellung einer Ausführungsform der Ventilklappe einschließlich Lagerung am Ventilkörper,
Figur 4 schematische Darstellungen verschiedener Ansichten eines Nuckelhalters zur Befestigung an einem Säugetränkeeimer, und
Figur 5 eine Teilansicht eines Säugetränkeeimers mit aufgestecktem Nuckelhalter.

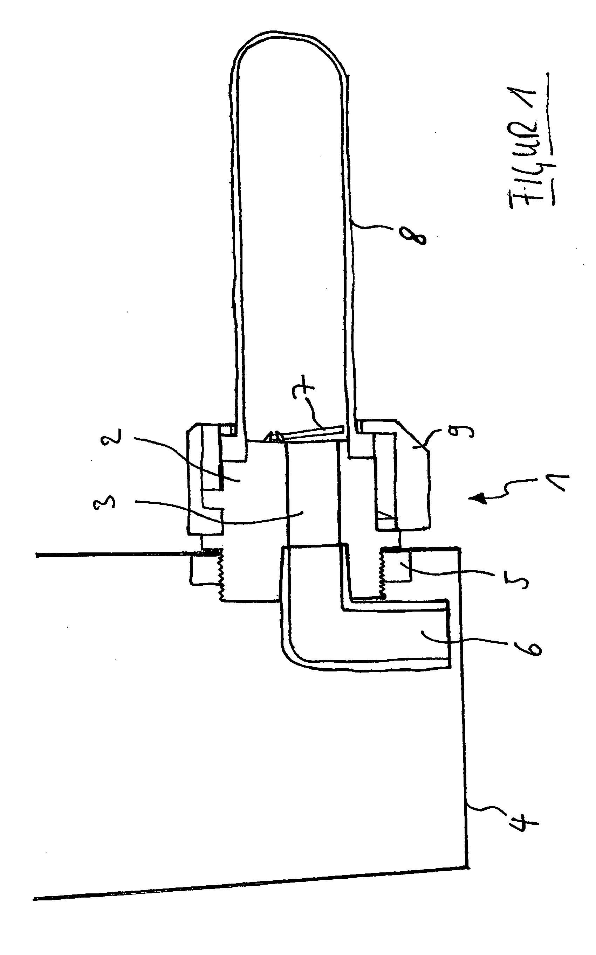

Die in der Figur 1 gezeigte Ventilvorrichtung 1 weist einen beispielsweise aus Kunststoff gefertigten Ventilkörper 2 mit einem Ventilkanal 3 auf, der in eine seitliche Öffnung eines Säugetränkeeimers 4 eingesteckt ist. Der Ventilkörper 2 weist eimerseitig ein Gewinde auf, auf das zur Befestigung der Ventilvorrichtung 1 am Säugetränkeeimer 4 eine Schraubenmutter 5 aufgeschraubt ist.

Der Ventilkanal 3 ist eimerseitig konisch aufgeweitet. In den konisch aufgeweiteten Bereich ist ein rechtwinklig abgewinkelter Saugrüssel 6 eingesteckt, dessen ventilkanalseitiges Ende entsprechend der konischen Aufweitung des Ventilkanals 3 gegenläufig verjüngt ist. Der Saugrüssel 6 ist auf diese Weise sehr einfach wiederholt abnehmbar und wieder aufsteckbar, was einer gründlichen Reinigung des Saugrüssels und des Ventilkanals zugute kommt.

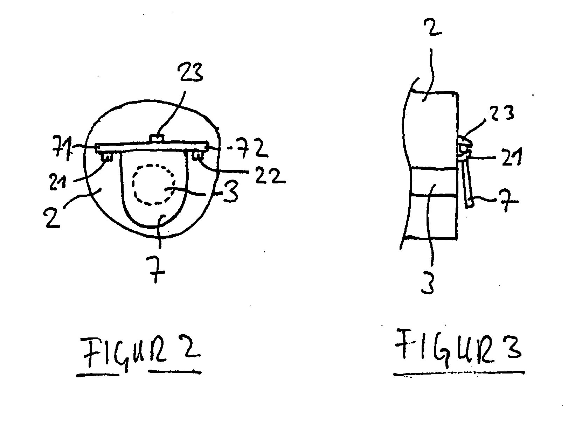

An der vom Säugetränkeeimer 4 abgewandten Seite des Ventilkanals 3 ist eine Ventilklappe 7 (auch Rückschlagklappe genannt) angeordnet, die derart drehbar gelagert ist, dass sie, sobald an einem auf den Ventilkörper 2 aufgesetzten Saugnuckel 8 gesaugt und damit eine Strömung in Richtung Saugnuckel 8 erzeugt wird, den Ventilkanal 3 öffnet und bei fehlender Strömung oder bei Strömung in Richtung Säugetränkeeimer 4 den Ventilkanal verschließt. Vorzugsweise ist am Ventilkörper 2 eine Einrichtung zur drehbaren Führung der Ventilklappe 7 vorgesehen, in oder auf die die Ventilklappe 7 wiederholt ein- oder aufsteckbar und wieder abnehmbar ist. Die Ventilklappe 7 kann dazu beispielsweise, wie in den Figuren 2 und 3 rein schematisch dargestellt, an einer Seite zwei einander gegenüberliegende Achsstifte 71, 72 aufweisen, mit denen sie auf zwei Lagernasen 21,22 am Ventilkörper 2 aufliegt. Auf diesen Lagernasen 21,22 gehalten wird die Ventilklappe vermittels mindestens einer zwischen den beiden Lagernasen 21,22 seitlich zu diesen versetzt angeordneten Lagernase 23.

Der Saugnuckel 8 ist beispielsweise mittels eines Bejonettverschlusses 9 an dem Ventilkörper befestigt.

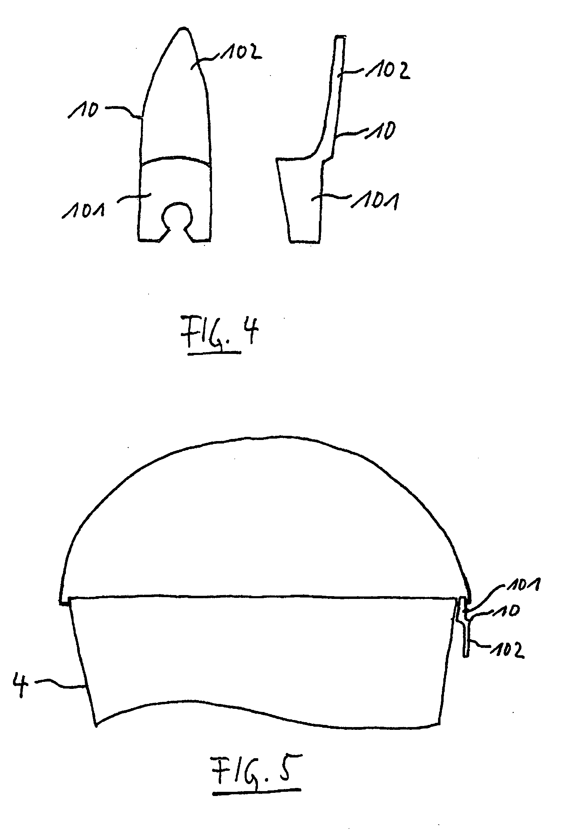

Der in den Figuren 4 und 5 gezeigte Nuckelhalter 10 zum Einklicken in eine Henkelhalterung eines Säugetränkeeimers 4 weist einen Montagesockel 101 und einen Haltestift 102 auf, auf den der vom Ventilkörper 2 abgenommene Saugnuckel 8 aufsteckbar ist.

## Patentansprüche

1. Ventilvorrichtung (1) für einen Saugnuckel (8) zum Anschließen an eine seitliche Öffnung eines Säugetränkeeimers (4), bei der ein Ventilkörper (2) mit einem Ventilkanal (3) vorgesehen ist, an dessen dem Saugnuckel (8) zugewandten Ende eine Ventilklappe (7) vorgesehen ist, die einen Rückfluss von Nahrungflüssigkeit in den Säugetränkeeimer (4) durch den Ventilkanal (3) hindurch stoppt, **dadurch gekennzeichnet, dass**
an dem dem Säugetränkeeimer (4) zugewandten Ende des Ventilkörpers (2) ein Saugrüssel (6) ein- oder aufsteckbar ist und zum Verbinden des Saugnuckels (8) mit der vom Säugetränkeeimer (4) abgewandten Seite des Ventilkörpers (2) ein mit dem Ventilkörper verbindbarer Bajonettverschluss (9) oder Klickverschluss vorgesehen ist.

2. Ventilvorrichtung nach Anspruch 1, **dadurch gekennzeichnet, dass** am ventilkörper (2) eine Einrichtung zur drehbaren Führung der Ventilklappe (7) vorgesehen ist, an die die Ventilklappe (7) wiederholt ansteckbar und wieder abnehmbar ist.

3. Ventilvorrichtung nach Anspruch 1 oder 2, **dadurch gekennzeichnet, dass** der Ventilkanal (3) an seinem dem Säugetränkeeimer (4) zugewandten Ende konisch aufgeweitet und der Saugrüssel (6) entsprechend gegenläufig verjüngt ist.

4. Säugetränkeeimer mit einer ventilvorrichtung (1) gemäß einem der Ansprüche 1 bis 3, der einen Nuckelhalter (10) aufweist, auf dem der Saugnuckel (8) nach dessen Reinigung zum Trocknen aufsteckbar ist, wobei der Nuckelhalter (10) insbesondere an einer Halterung eines Eimerhenkels einklickbar ist.

## Claims

1. Valve device (1) for a teat (8) for connection to a lateral opening of a drinking bucket (4), having a valve body (2) with a valve channel (3) which has, at its end which is directed toward the teat (8), a valve flap (7), which stops backflow of feeding liquid into the drinking bucket (4) through the valve channel (3), **characterized in that**
a suction nozzle (6) can be plugged in or on at that end of the valve body (2) which is directed towards the drinking bucket (4), and a click-fit closure or bayonet closure (9), which can be connected to the valve body, is provided in order to connect the teat (8) to that side of the valve body (2) which is directed away from the swill bucket (4).

2. Valve device according to Claim 1, **characterized in that** the valve body (2) has provided on it a means which is intended for the rotatable guidance of the valve flap (7) and in relation to which the valve flap (7) can be repeatedly plugged on and removed again.

3. Valve device according to Claim 1 or 2, **characterized in that** the valve channel (3) is widened conically at its end which is directed towards the drinking bucket (4), and the suction nozzle (6) is tapered correspondingly in the opposite direction.

4. Swill bucket with a valve device (1) according to one of Claims 1 to 3 and having a teat holder (10) on which the teat (8) can be plugged for drying purposes following cleaning, wherein , in particular, the teat holder (10) can be click-fitted on a retaining means of a bucket handle.

## Revendications

1. Dispositif de soupape (1) pour une tétine d'aspiration (8) destiné à être raccordé à une ouverture latérale d'un seau de boisson par aspiration (4), dans lequel est prévu un corps de soupape (2) doté d'un canal de soupape (3) à l'extrémité tournée vers la tétine d'aspiration (8) duquel est prévu un clapet de soupape (7) qui bloque un retour d'aliment liquide dans le seau de boisson par aspiration (4) à travers le canal de soupape (3),
**caractérisé en ce**
**qu'**un tube d'aspiration (6) peut être enfiché ou attaché à l'extrémité, tournée vers le seau de boisson par aspiration (4), du corps de soupape (2) et, pour la liaison de la tétine d'aspiration (8) au côté du corps de soupape (2) opposé au seau de boisson par aspiration (4), une fermeture à baïonnette (9) ou une fermeture à cliquet pouvant être reliée au corps de soupape est prévue.

2. Dispositif de soupape selon la revendication 1, **caractérisé en ce qu'**un dispositif pour le guidage de manière rotative du clapet de soupape (7) est prévu sur le corps de soupape (2), sur lequel dispositif le clapet de soupape (7) peut être, de manière réitérée, enfiché et à nouveau retiré de celui-ci.

3. Dispositif de soupape selon la revendication 1 ou 2, **caractérisé en ce que** le canal de soupape (3) est élargi de manière conique à son extrémité tournée vers le seau de boisson par aspiration (4) et le tube d'aspiration (6) est rétréci de manière correspondante dans le sens inverse.

4. Seau de boisson par aspiration comprenant un dispositif de soupape (1) selon l'une quelconque des revendications 1 à 3, qui comprend un support de tétine (10) sur lequel le tube d'aspiration (8) peut être attaché après son nettoyage en vue de son séchage, le support de tétine (10) pouvant être encliqueté en particulier sur un support d'une anse de seau.
